# FASCICULE DE BREVET EUROPEEN

(11) **EP 4 045 398 B1**
(45) Date de publication et mention de la délivrance du brevet: **23.08.2023**
(21) Numéro de dépôt: 20803225.0
(22) Date de dépôt: 16.10.2020
(51) Int. Cl.: B64C 11/06, B64C 11/32, F04D 29/32, F01D 5/30, B64D 27/00

(54) **ENSEMBLE POUR UNE AUBE DE TURBOMACHINE COMPRENANT UNE ATTACHE DÉFINISSANT UNE ALVÉOLE ET UNE CALE ADAPTÉE POUR ÊTRE REÇUE DANS L'ALVÉOLE EN MÊME TEMPS QU'UN PIED DE L'AUBE**
ANORDNUNG FÜR EINE TURBOMASCHINENSCHAUFEL MIT EINER BEFESTIGUNG, DIE EINE ZELLE DEFINIERT, UND EINE HALTEVORRICHTUNG, DIE GEEIGNET IST, IN DER ZELLE ZUSAMMEN MIT EINEM SCHAUFELFUSS AUFGENOMMEN ZU WERDEN
ASSEMBLY FOR A TURBOMACHINE BLADE COMPRISING AN ATTACHMENT DEFINING A CELL AND A SHIM ADAPTED TO BE RECEIVED IN THE CELL AT THE SAME TIME AS A FOOT OF THE BLADE

(30) Priorité: 18.10.2019 FR 1911661
(43) Date de publication de la demande: 24.08.2022
(73) Titulaire: SAFRAN AIRCRAFT ENGINES, 75015 Paris (FR)
(72) Inventeur: COURTIER, Vivien, Mickaël, 77550 MOISSY-CRAMAYEL (FR); JACQUEMARD, Christophe, Paul, 77550 MOISSY-CRAMAYEL (FR); JOUDON, Vincent, 77550 MOISSY-CRAMAYEL (FR)
(74) Mandataire: Regimbeau
(86) Numéro de dépôt international: PCT/FR2020/051867
(87) Numéro de publication internationale: WO 2021/074554

(56) Documents cités:
- EP-A1- 1 905 957
- EP-A1- 2 009 245
- EP-A2- 1 382 800
- FR-A1- 2 996 584
- US-A1- 2009 324 414

## Description

### DOMAINE DE L'INVENTION

La présente invention concerne un ensemble de pièces servant à attacher une aube à un rotor de moteur d'aéronef, notamment un rotor de soufflante non-carénée (tels qu'un moteur de type « Open Rotor » présentant deux hélices tournantes ou un moteur de type USF pour « Unducted Single Fan » présentant un aubage mobile et un aubage fixe ou un turbopropulseur présentant une architecture avec une seule hélice).

### ETAT DE LA TECHNIQUE

L'intérêt des moteurs à soufflante non-carénée est que le diamètre de la soufflante n'est pas limité par la présence d'un carénage, de sorte qu'il est possible de concevoir un moteur présentant un fort taux de dilution, et par conséquent une consommation réduite de carburant.

Ainsi, dans ce type de moteur, les aubes de la soufflante peuvent présenter une grande envergure.

De telles soufflantes non-carénées comprennent conventionnellement une attache d'aube définissant une alvéole pour recevoir un pied d'une aube. L'attache d'aube comprend deux flancs en regard définissant entre eux un passage donnant dans l'alvéole et formant des butées empêchant le pied de sortir de l'alvéole par le passage.

De plus, ces moteurs comprennent généralement un mécanisme permettant de modifier l'angle de calage des aubes afin d'adapter la poussée générée par la soufflante en fonction des différentes phases de vol.

Cependant, la conception de telles aubes nécessite de prendre en compte des contraintes antagonistes.

D'un côté, le dimensionnement de ces aubes doit permettre des performances aérodynamiques optimales (maximiser le rendement et fournir la poussée tout en minimisant les pertes). L'amélioration des performances aérodynamiques de la soufflante tend vers une augmentation du taux de dilution (BPR, acronyme anglais de bypass ratio), ce qui se traduit par une augmentation du diamètre externe et donc de l'envergure de ces aubes.

D'un autre côté, il est également nécessaire de garantir une résistance aux contraintes mécaniques pouvant s'exercer sur ces aubes tout en limitant leur signature acoustique.

Par ailleurs, sur les architectures à soufflante non-carénée, le démarrage du moteur est généralement effectué avec un calage très ouvert. En effet, un calage très ouvert permet de consommer la puissance par le couple, ce qui assure la sécurité machine en garantissant des régimes de soufflante faibles.

Or, avec un calage très ouvert, les aubes subissent un écoulement aérodynamique turbulent, complètement décollé, qui génère une excitation vibratoire large bande. En particulier sur des aubes à large corde et de grande envergure, l'effort de flexion est intense bien que le régime moteur ne soit pas maximal.

En raison de cette excitation vibratoire, le pied d'aube est susceptible de battre dans l'alvéole de l'attaque dans laquelle ce pied est reçu. Or, un tel battement risque d'endommager l'aube ou l'attache elle-même.

Les problématiques exposées ci-dessous pourraient également se rencontrer dans le cas d'un moteur caréné qui comprendrait un calage variable des aubes de soufflante.

Il a été proposé d'incorporer à une soufflante une cale déformable intercalée en force dans l'alvéole entre le pied d'aube et l'attache. Une telle cale déformable permet de serrer davantage le pied d'aube dans l'alvéole de l'attache, ce qui a pour conséquence de réduire le phénomène de battement décrit plus haut.

Toutefois, une telle cale déformable n'est pas en mesure d'éliminer efficacement ce phénomène de battement dans des soufflantes à aubes à calage variable et à large corde et/ou de grande envergure, où l'on rencontre des efforts aérodynamiques particulièrement intenses même à des régimes de soufflante faibles. En relation avec les revendications annexées, US2009324414A1 divulgue un dispositif de verrouillage d'aube de turbine comportant une cale mobile dans une direction axiale. La cale est déplacée dans la direction axiale par un dispositif de tension, ce qui produit une force dans la direction axiale. La force dans la direction axiale fait que l'aube de turbine est pressée contre le support d'aube. En outre, EP1905957A1 divulgue un appareil doté d'un moyen de pressurisation permettant d'exercer une force de pression sur un pied d'aube dans une direction radiale. L'appareil est conçu de telle sorte que la force de pression est exercée par un mouvement rotatif d'une unité rotative.

### EXPOSE DE L'INVENTION

Un but de la présente invention est d'améliorer la résistance à l'endommagement de pieds d'aube ou d'alvéoles dans des soufflantes non-carénées à large corde et/ou de grande envergure.

Il est dès lors proposé un ensemble pour une aube de turbomachine, l'ensemble comprenant :
- une attache définissant une alvéole pour recevoir un pied d'aube, l'attache comprenant deux flancs définissant entre eux un passage donnant dans l'alvéole et formant des butées empêchant le pied de sortir de l'alvéole par le passage,
- deux cales, chaque cale comprenant :
   o une première surface d'appui pour venir en appui sur le pied
   o une deuxième surface d'appui opposée à la première surface d'appui pour venir en appui contre l'attache lorsque la cale est reçue dans l'alvéole, o un filetage,
   dans lequel les première et deuxième surfaces d'appui respectives des deux cales sont:
   ∘fixes l'une par rapport à l'autre,
   ∘ orientées pour qu'un déplacement d'une des deux cales dans l'alvéole par rapport à l'autre cale fasse varier la somme des efforts exercé par les deux cales sur le pied,
- une vis de serrage coopérant avec les filetages respectifs des deux cales de sorte qu'une rotation de la vis de serrage entraîne un déplacement d'une des deux cales par rapport à l'autre cale.

Le fait que la première surface d'appui et la deuxième surface d'appui de chaque cale soient fixes l'une par rapport à l'autre permet d'appliquer un effort de serrage beaucoup plus important sur le pied d'aube, notamment dans des régimes de soufflante faibles, comparativement à une cale déformable.

Par ailleurs, comme un déplacement de la cale dans l'alvéole par rapport à l'attache fasse varier la valeur de l'effort exercé par la cale sur le pied, la même cale peut avantageusement s'adapter à des éventuelles dispersions de fabrication de l'alvéole.

L'ensemble proposé peut également comprendre les caractéristiques optionnelles suivantes, prises seules ou combinées entre elles lorsque cela est techniquement possible.

De préférence, l'attache présente une surface de fond contre laquelle la deuxième surface d'appui d'une des deux cales vient en appui lorsque la cale est reçue dans l'alvéole, et dans lequel une surface parmi la deuxième surface d'appui et la surface de fond a un profil rectiligne parmi la deuxième surface d'appui et la surface de fond dans un plan parallèle à une direction d'insertion du pied d'aube dans l'alvéole, et l'autre surface a un profil courbe convexe dans ledit plan.

De préférence, la surface ayant un profil courbe convexe est la deuxième surface d'appui.

De préférence, l'ensemble comprend un dispositif de verrouillage configuré pour verrouiller au moins une des deux cales dans différentes positions relatives à l'attache, la somme des efforts exercé par les deux cales sur le pied ayant des valeurs différentes dans les différentes positions.

De préférence, le dispositif de verrouillage comprend la vis de serrage et les filetages.

De préférence, le dispositif de verrouillage comprend une douille dans laquelle est formé un des filetages, dans lequel une des deux cales définit une cavité contenant la douille et adaptée pour bloquer la douille par rapport à la cale dans une direction parallèle à un axe de rotation de la vis de serrage et pour autoriser un jeu de la douille par rapport à la cale dans une direction radiale par rapport à l'axe de rotation de la vis de serrage.

De préférence, le dispositif de verrouillage comprend un système d'anti-rotation empêchant la vis de serrage d'être mise en rotation dans un sens provoquant une diminution de la somme des efforts exercés par les deux cales sur le pied.

De préférence, la vis de serrage comprend une tête agencée pour déboucher à l'extérieur de l'alvéole et du dispositif de verrouillage de manière à pouvoir être mise en prise et entraînée en rotation par un outil, lorsque les deux cales sont reçues dans l'alvéole.

De préférence, l'attache définit deux accès opposés permettant une introduction du pied et des deux cales dans l'alvéole, et dans lequel le dispositif de verrouillage comprend deux verrous traversés par la vis de serrage, les verrous étant agencés pour empêcher les deux cales de quitter l'alvéole par les accès opposés lorsque la vis de serrage est mise en rotation.

De préférence, l'attache présente deux surfaces de fond contre lesquelles les deuxièmes surfaces d'appui des deux cales viennent respectivement en appui lorsque les deux cales sont reçues dans l'alvéole, dans lequel les deuxièmes surfaces d'appui ont des pentes différentes, et dans lequel les surfaces de fond ont des pentes différentes.

De préférence, au moins une des deux cales est métallique, par exemple en titane.

Il est également proposé une soufflante non-carénée, par exemple à calage variable, comprenant l'ensemble discuté ci-dessus.

### DESCRIPTION DES FIGURES

D'autres caractéristiques, buts et avantages de l'invention ressortiront de la description qui suit, qui est purement illustrative et non limitative, et qui doit être lue en regard des dessins annexés.
- La figure 1 représente de manière schématique un exemple de moteur incluant une soufflante non-carénée.
- La figure 2 est une vue en perspective d'une attache destinée à recevoir un pied d'aube.
- La figure 3 est une vue de côté d'un dispositif de serrage comprenant des cales, selon un mode de réalisation de l'invention ;
- La figure 4 est une vue en coupe longitudinale de certaines pièces du dispositif représenté en figure 3.
- Les figures 5, 6, 7 illustrent schématiquement des profils de certaines surfaces de l'attache de la figure 2 et du dispositif de serrage des figures 3, 4, selon trois modes de réalisation différents.
- Les figures 8, 9, 10 sont des vues en perspective d'une attache, d'un pied d'aube et d'un dispositif de serrage selon un mode de réalisation, à trois différents stades de leur assemblage.
Sur l'ensemble des figures, les éléments similaires portent des références identiques.

### DESCRIPTION DETAILLEE DE L'INVENTION

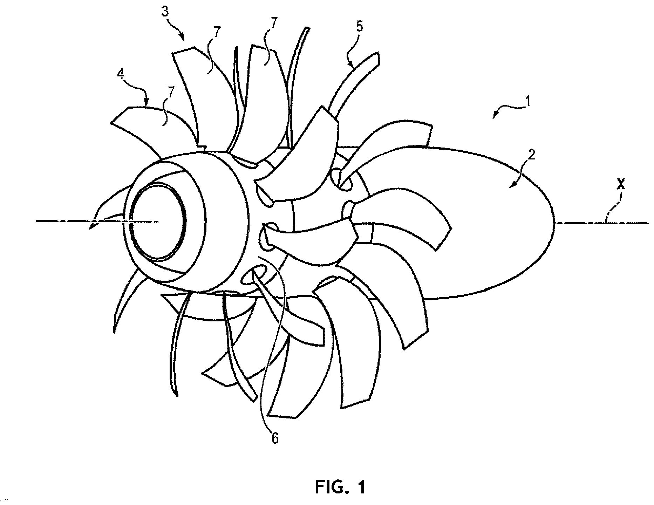

Sur la **figure 1****,** le moteur 1 représenté est un moteur de type « Open Rotor », en configuration couramment qualifiée de « pusher » (i.e. la soufflante est placée à l'arrière du générateur de puissance avec une entrée d'air située sur le côté, à droite sur la figure 1).

Le moteur comprend une nacelle 2 destinée à être fixée à un fuselage d'un aéronef, et une soufflante 3 non-carénée. La soufflante 3 comprend deux rotors de soufflante contrarotatifs 4 et 5. Autrement dit, lorsque le moteur 1 est en fonctionnement, les rotors 4 et 5 sont entraînés en rotation par rapport à la nacelle 2 autour d'un même axe de rotation X (qui coïncide avec un axe principal du moteur), en sens opposés.

Dans l'exemple illustré sur la figure 1, le moteur 1 est un moteur de type « Open Rotor », en configuration « pusher », à rotors de soufflante contrarotatifs. Cependant, l'invention n'est pas limitée à cette configuration. L'invention s'applique également à des moteurs de type « Open Rotor », en configuration « puller » (i.e. la soufflante est placée en amont du générateur de puissance avec une entrée d'air située avant, entre ou juste derrière les deux rotors de soufflante).

Le moteur peut toutefois présenter une architecture différente, telles qu'une architecture comprenant un rotor de soufflante comprenant des aubes mobiles et un stator de soufflante comprenant des aubes fixes, ou bien un unique rotor de soufflante.

Le moteur peut avoir une architecture de type turbopropulseur (comprenant un unique rotor de soufflante).

Le moteur peut être caréné et présenter deux flux et dans lequel une soufflante à calage variable alimente lesdits flux, à savoir le flux primaire et le flux secondaire dans le moteur.

Sur la figure 1, chaque rotor de soufflante 4, 5 comprend un moyeu 6 monté rotatif par rapport à la nacelle 2 et une pluralité d'aubes 7 fixées au moyeu 6. Les aubes 7 s'étendent sensiblement radialement par rapport à l'axe de rotation X du moyeu.

Dans la présente demande, l'amont et l'aval sont définis par rapport au sens d'écoulement normal du gaz dans le rotor 4, 5 et à travers la turbomachine. Par ailleurs, on appelle axe X du rotor 4, 5, son axe de rotation. La direction axiale correspond à la direction de l'axe X et une direction radiale est une direction perpendiculaire à cet axe et passant par lui. Par ailleurs, la direction circonférentielle correspond à une direction perpendiculaire à l'axe X et ne passant pas par lui. Sauf précision contraire, interne et externe, respectivement, sont utilisés en référence à une direction radiale de sorte que la partie ou la face interne d'un élément est plus proche de l'axe X que la partie ou la face externe du même élément.

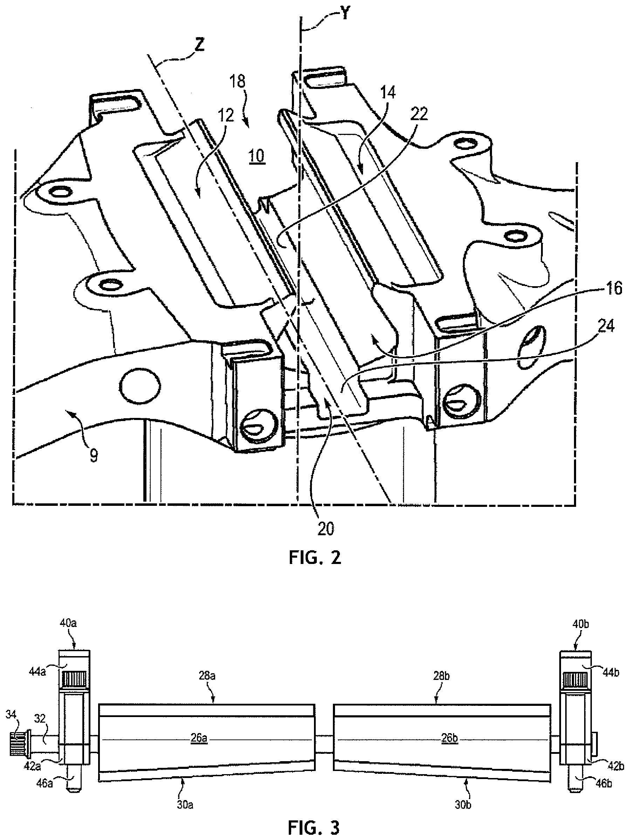

En référence à la **figure 2****,** la soufflante 3 comprend, pour chaque aube 7, une pièce d'attache 9 ou plus simplement attache 9. L'attache 9 est montée rotative par rapport au moyeu 6 autour d'un axe de calage Y. Plus précisément, l'attache 9 est montée rotative à l'intérieur d'un logement ménagé dans le moyeu 6, par l'intermédiaires de billes ou d'autres éléments roulants.

L'attache 9, pouvant porter le nom de pivot dans la littérature, définit une alvéole 10 pour recevoir un pied de l'aube 7, le pied présentant par exemple une forme en queue d'aronde.

L'attache 9 comprend notamment deux flancs 12, 14 définissent entre eux une ouverture radiale supérieure de l'alvéole 10, opposée à un fond de l'alvéole 10. Les deux flancs 12, 14 sont inclinés l'un vers l'autre et formant des portées.

L'alvéole 10 s'étend dans une direction Z entre deux accès 16, 18 opposés définis par l'attache 9.

L'un des deux accès 16, 18 se trouve du côté d'un bord d'attaque de l'aube, et l'autre accès se trouve du côté d'un bord de fuite de l'aube.

C'est par l'un ou l'autre de ces accès 16, 18 opposés qu'un pied d'aube peut être engagé dans l'alvéole 10, par coulissement.

Les deux flancs 12, 14 présentent des surfaces donnant dans la cavité qui sont cylindriques (dont les génératrices sont parallèles à l'axe Z).

Les deux flancs 12, 14 comprennent deux parois mutuellement en regard et parallèles définissant une gorge 20 au fond de l'alvéole 10.

Contrairement aux surfaces des flancs 12, 14, le fond de l'alvéole 10 n'est pas de profil rectiligne dans un plan parallèle au plan (Y, Z). Dans la suite, on appellera profil « sagittal » le profil d'une partie de l'attache dans un plan parallèle au plan (Y, Z).

Le fond de l'alvéole 10 comprend deux surfaces de fond 22, 24 présentant des pentes différentes (ces pentes seront discutées plus en détail plus loin).

Les deux surfaces de fond sont situées dans la gorge 20 entre les deux accès 16, 18.

L'attache est en titane.

En référence à la **figure 3****,** un dispositif de serrage comprend deux cales 26a, 26b.

La cale 26a est adaptée pour être reçue dans l'alvéole 10 en même temps qu'un pied d'aube, entre le pied et le fond de l'alvéole 10.

La cale 26a présente une première surface d'appui 28a pour venir en appui sur un pied d'aube reçu dans l'alvéole 10, et une deuxième surface 30a d'appui opposée à la première surface d'appui 28a pour venir en appui contre l'attache lorsque la cale 26a est reçue dans l'alvéole 10.

La première surface d'appui 28a est fixe par rapport à la deuxième surface d'appui 28b. La cale est d'une seule pièce (monobloc) et rigide.

La première surface d'appui 28a et la deuxième surface d'appui 30a sont orientées l'une par rapport à l'autre pour qu'un déplacement de la cale 26a dans l'alvéole 10 par rapport à l'attache 9 fasse varier la valeur d'un effort exercé par la cale 26a sur le pied, notamment dans une direction radiale parallèle à l'axe Y.

La première surface d'appui 28a est destinée à venir en appui contre une surface libre inférieure du pied. La première surface d'appui 28a est par exemple de forme complémentaire à cette surface libre inférieure du pied.

La première surface d'appui 28a a un profil sagittal rectiligne de manière à pouvoir prendre appui sur un pied dont la surface libre est de profil sagittal également rectiligne.

De préférence, la cale 26a comprend un revêtement appliqué sur sa deuxième surface d'appui 28a visant à réduire la friction entre la cale et le fond de l'alvéole 10. Ce revêtement est par exemple en carbone amorphe (Diamond Like Carbon en anglais) qui présente l'avantage d'être à la fois dur et flexible.

Similairement, la cale 26b présente une première surface d'appui 28b pour venir en appui sur un pied d'aube reçu dans l'alvéole 10, et une deuxième surface 30b d'appui opposée à la première surface d'appui 28b pour venir en appui contre l'attache lorsque la cale 26b est reçue dans l'alvéole 10.

Les surfaces 28b, 30b présentent les mêmes propriétés que les surfaces 28a, 30a susmentionnées.

La deuxième surface d'appui 30a de la cale 26a est destinée à venir en appui contre l'une des surfaces de fond (par exemple la surface 20), tandis que la deuxième surface d'appui 30b de l'autre cale 26b est destinée à venir en appui contre l'autre surface de fond (par exemple la surface 22) ou vice-versa.

Les cale 26a, 26b sont typiquement en titane.

Les premières surfaces d'appui 28a, 28b et les deuxièmes surfaces d'appui 30a, 30b des deux cales 26a, 26b sont par ailleurs orientées pour qu'un déplacement d'une des cales dans l'alvéole 10 par rapport à l'autre cale fasse varier la somme des efforts radiaux exercé par les deux cales sur un pied d'aube reçu dans l'alvéole 10, notamment dans une direction parallèle à l'axe Y.

La soufflante 3 comprend par ailleurs un dispositif de verrouillage configuré pour verrouiller au moins une des cales dans différentes positions relatives à l'attache, l'effort radial exercé par la cale sur le pied ayant des valeurs différentes dans les différentes positions.

Le dispositif de verrouillage comprend une vis de serrage 32.

La vis de serrage 32 comprend une tête 34 susceptible d'être mise en prise et entraînée en rotation par un outil (par exemple un tournevis).

La vis de serrage est en acier.

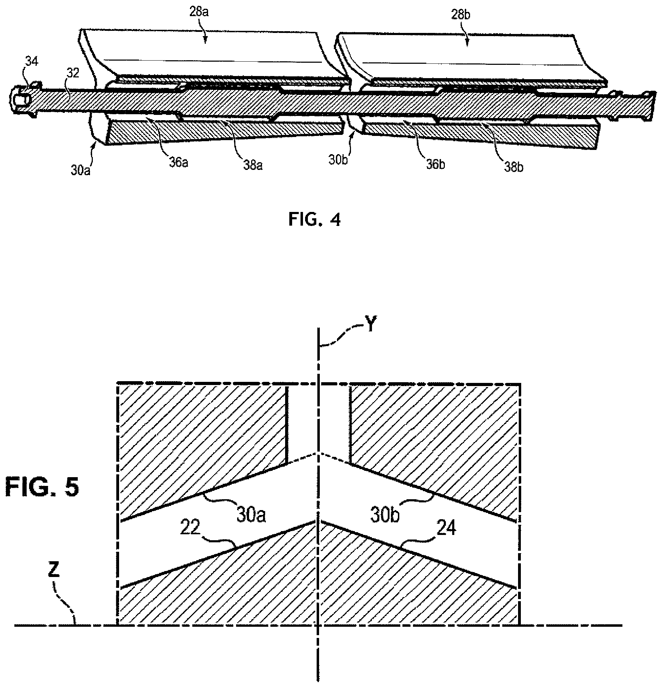

En référence à la **figure 4****,** les cales 26a, 26b définissent deux passages traversants 36a, 36b dans lesquels la vis de serrage 32 est engagée simultanément.

Le dispositif de verrouillage comprend par ailleurs, pour chaque cale, un filetage coopérant avec la vis de serrage 32 de sorte qu'une rotation de la vis de serrage entraîne un déplacement de la cale le long de la vis de serrage 32.

Les filetages peuvent être directement formés dans les cales 26a, 26b. Toutefois, de préférence et comme illustré en figure 4, le dispositif de verrouillage comprend deux douilles 38a, 38b dans lesquelles les deux filetages sont formées. Les douilles 38a, 38b forment des bagues qui s'étendant dans les passages 36a, 36b entre la vis de serrage 32 et les cales (chaque douille entourant un tronçon de la vis de serrage 32 et étant elle-même entourée par l'une des cales).

Les deux filetages coopèrent avec la vis de serrage 32 de sorte qu'une rotation de la vis de serrage 32 entraîne un déplacement de la cale 26a par rapport à l'autre cale 26b le long de la vis de serrage 32. A cet effet, il est possible de prévoir dans la vis de serrage 32 deux tronçons différents ayant des filetages de sens opposés coopérant respectivement avec les filetages des douilles 38a, 38b. Ainsi, lorsque la vis de serrage 32 est mise en rotation dans un premier sens (ou sens de serrage), les deux cales 26a, 26b se rapprochent l'une de l'autre, et lorsque la vis de serrage 32 est mise en rotation dans un deuxième sens (ou sens de desserrage) opposé au premier sens, les deux cales 26a, 26b s'éloignent l'une de l'autre.

Chaque cale 26a, 26b comprend des moyens pour bloquer axialement la douille dans l'axe du passage correspondant dans lequel elle est logée. Ces moyens de blocage axial comprennent par exemple sur la vis 32 des bourrelets d'arrêt 320 prévus pour être engagés dans une butée axiale 220 aménagée en saillie dans l'alvéole 10. Ainsi, lorsque la vis de serrage 32 est mise en rotation par rapport à une cale, la cale se déplace le long de l'axe de la vis de serrage 32 par rapport à cette dernière.

Une fois la vis de serrage 32 couplée aux cales 26a, 26b, les premières surfaces d'appui 28a, 28b respectives des deux cales 26a, 26b sont parallèles entre elles et alignées de sorte à pouvoir prendre appui simultanément sur une surface libre cylindrique d'un pied d'aube.

Les deuxièmes surfaces d'appui 30a, 30b présentent par ailleurs des pentes différentes.

La deuxième surface d'appui 30a et la surface de fond avec laquelle elle est en contact lorsque la cale est dans l'alvéole 10, par exemple la surface de fond 20, ont une pente en commun.

Similairement, la deuxième surface d'appui 30b et la surface de fond avec laquelle elle est en contact lorsque la cale est dans l'alvéole 10, par exemple la surface de fond 22, ont une pente en commun.

Les deuxièmes surfaces d'appui 30a, 30b et les surfaces de fond 22, 24 peuvent avoir des profils sagittaux différents.

Dans un premier mode de réalisation illustré en **figure 5****,** les deuxièmes surfaces d'appui 30a, 30b ont un profil sagittal rectiligne et les surfaces de fond 22, 24 ont également un profil sagittal rectiligne.

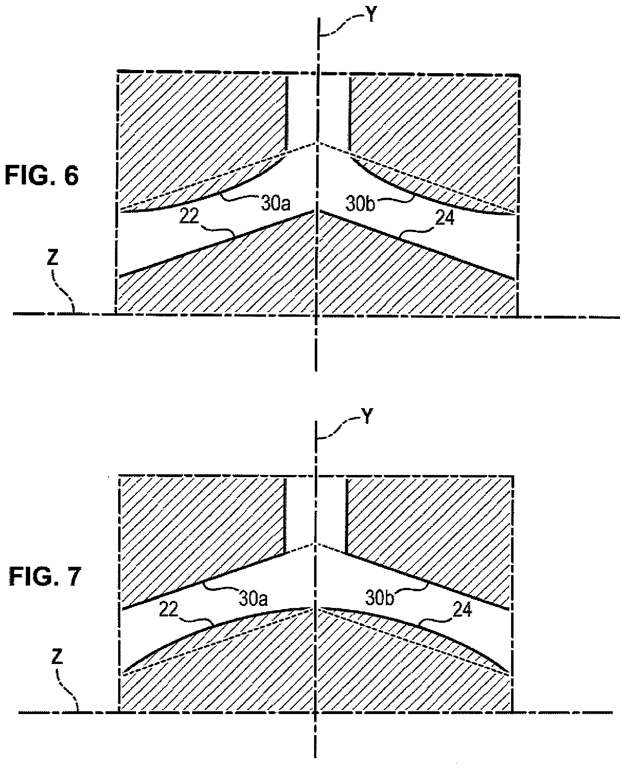

Dans un deuxième mode de réalisation illustré en **figure 6****,** les deuxièmes surfaces d'appui 30a, 30b ont un profil sagittal courbe convexe et les surfaces de fond 22, 24 ont également un profil sagittal rectiligne.

Dans un troisième mode de réalisation illustré en **figure 7****,** les deuxièmes surfaces d'appui 30a, 30b ont un profil sagittal rectiligne et les surfaces de fond 22, 24 ont également un profil courbe convexe.

Le deuxième mode de réalisation et le troisième mode de réalisation ont pour avantage, par rapport au premier mode de réalisation, d'éviter la survenance d'arc-boutement d'une des cales au cours de son déplacement dans l'alvéole 10 qui empêcherait la cale d'adopter une position stable lui permettant d'exercer un effort approprié sur le pied d'aube.

Le deuxième mode de réalisation présente l'avantage supplémentaire par rapport au troisième mode de réalisation d'être plus facile à fabriquer.

Dans les trois modes de réalisations qui précèdent, le fond de l'alvéole 10 est globalement convexe. Dans ce cas, les deux surfaces de fond 22, 24 forment ensemble une protubérance et sont reliées l'une à l'autre en une ligne formant un sommet de la protubérance.

De retour à la figure 2, le dispositif de verrouillage comprend par ailleurs deux verrous 40a, 40b agencés pour empêcher chaque cale 26a, 26b de quitter l'alvéole 10 par les accès opposés 26, 18.

Les deux verrous 40a, 40b sont traversés par la vis de serrage.

Les verrous 40a, 40b sont dimensionnés pour obstruer au moins partiellement les deux accès 16, 18 opposés à l'alvéole 10.

Le verrou 40a comprend deux parties : une partie inférieure 42a et une partie supérieure 44a.

La partie inférieure 42a définit partiellement un passage traversant pour la vis de serrage 32. La partie supérieure 44a définit également partiellement ce même passage. Le passage traversant du verrou 40a est formé par assemblage de ses deux parties 42a et 42b.

Le verrou 40b comprend deux parties : une partie inférieure 42b et une partie supérieure 44b similaires aux parties 42a et 44a.

Les orifices traversants définis par les verrous 40a, 40b et traversés par la vis de serrage 32 sont de préférence de dimensions adaptées pour autoriser un jeu radial de la vis 32, c'est-à-dire que la vise 32 engagée dans l'un de ces passages peut se déplacer légèrement dans une directement parallèle à l'axe Y, par rapport au verrou 40a ou 40b correspondant.

Les verrous 40a, 40b peuvent être en titane ou en acier selon leur épaisseur.

La tête 34 de la vis de serrage 32 débouche à l'extérieur de l'alvéole 10 et du dispositif de verrouillage (notamment hors des verrous 40a, 40b) de manière à pouvoir être mise en prise et entraînée en rotation par un outil, lorsque la cale est reçue dans l'alvéole 10.

Le dispositif de verrouillage comprend par ailleurs des moyens de fixation de chaque verrou 40a, 40b à l'attache 9.

Ces moyens de fixation comprennent par exemple des vis de fixation 46a, 46b (typiquement deux par verrou) et des trous taraudés dans les verrous et dans l'attache, trous taraudés dans lequel les vis de fixation 46a, 46b sont reçues.

Le dispositif de verrouillage peut également comprendre un système d'anti-rotation (non illustré) empêchant la vis de serrage d'être mise en rotation dans un sens provoquant une diminution de l'effort exercé par le dispositif de serrage sur le pied. Le système d'anti-rotation peut par exemple comprendre une goupille susceptible d'être passée radialement en travers de la vis de serrage 32, voire également d'un des verrous 40a, 40b, afin de bloquer la vis de serrage en rotation 32 relativement à l'attache 9 et/ou à l'un des verrous 40a, 40b.

L'assemblage de l'attache 9, d'une aube, et du dispositif de serrage comprend les étapes suivantes.

L'ensemble formé par les cales 26a, 26b et la vis de serrage 32 est insérée dans l'alvéole 10 par l'un quelconque des deux accès opposés définis par l'attache 9, de sorte que les deuxièmes surfaces d'appui 30a, 30b des deux cales 26a, 26b reposent respectivement sur les deux surfaces de fond de l'alvéole 10.

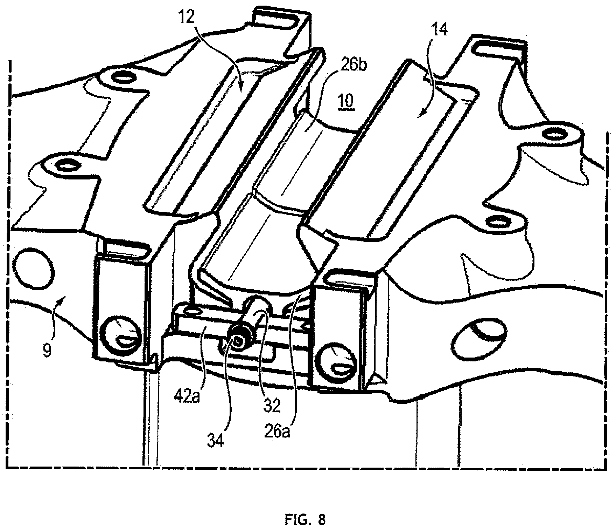

Les parties inférieures 42a, 42b des verrous 40a, 40b sont placées ensuite entre la vis de serrage 32 et l'attache 9, devant chacun des deux accès opposés 16, 18 (voir **figure** 8), en soulevant légèrement la vis de serrage 32.

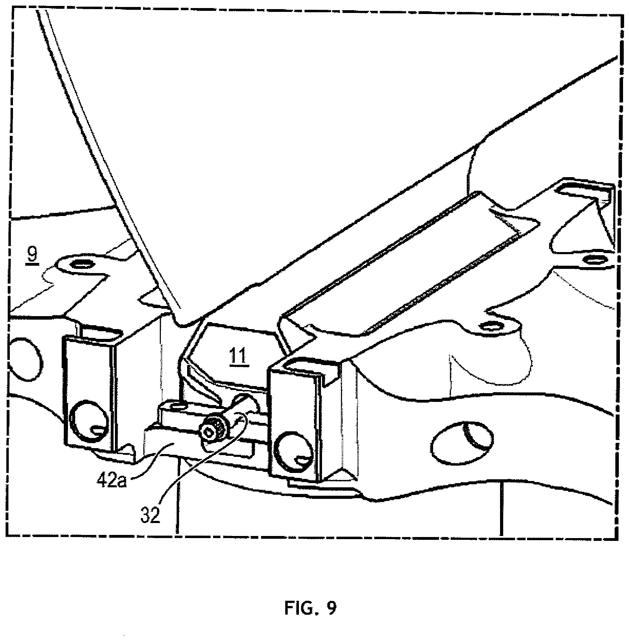

Un pied d'aube 11 est ensuite engagé dans l'alvéole 10 par l'un des deux accès opposés 16, 18 dans la direction Z, de sorte que le pied d'aube 11 repose sur les premières surfaces d'appui 28a, 28b des cales 26a, 26b. Une fois positionnée dans l'alvéole 10, l'aube traverse le passage supérieur de l'alvéole 10 ménagé entre les deux flancs de l'attache. Le pied d'aube 11 présente une forme en queue d'aronde lui permettant d'être bloqué radialement dans l'alvéole 10 parallèlement à l'axe radial Y par les flancs 12, 14 (voir **figure 9**) en favorisant la retenue de l'aube en centrifuge.

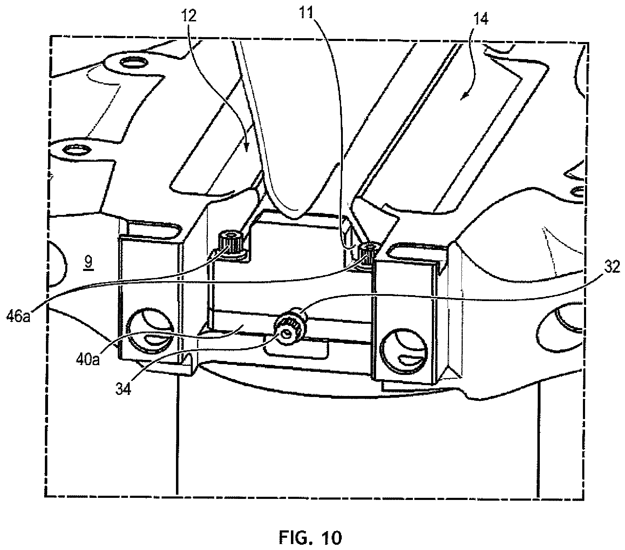

Les deux parties supérieures 44a, 44b des verrous sont ensuite placées sur les parties inférieures 42a, 42b des verrous. Les verrous 40a, 40b sont fixés à l'attache au moyen des vis de fixation (voir **figure 10**).

Les deux verrous 40a, 40b ainsi formés empêchent les cales 26a, 26b, voire le pied d'aube 11, de sortir de sortir de l'alvéole 10 par les deux accès opposés.

La vis de serrage 32 est mise en rotation au moyen d'un outil mis en prise avec la tête 34 dans un premier sens (sens de serrage). Cette rotation entraîne un rapprochement mutuel des deux cales 40a, 40b dans l'axe de la vis (parallèle à l'axe Z de l'alvéole 10) puisque les douilles 38a, 38b avec lesquelles la vis de serrage 32 coopère sont bloquées axialement relativement aux cales 26a, 26b. Dans le même temps, en raison des pentes des deuxièmes surfaces d'appui 30a, 30b et des surfaces de fond 22, 24, les cales 26a, 26b viennent exercer un effort sur le pied d'aube 11 dans une direction radiale parallèle à l'axe Y, de telle sorte que le pied d'aube 11 est serré entre les deux flancs et les cales. En faisant tourner la vis de serrage est tournée dans le premier sens, la valeur l'effort imprimé par les cales 26a, 26b sur le pied d'aube 11 est augmentée.

Similairement, lorsque la vis de serrage 32 est mise en rotation dans un deuxième sens opposé au premier sens (sens de desserrage), cette rotation entraîne un éloignement mutuel des deux cales 26a, 26b. Dans le même temps, en raison des pentes des deuxièmes surfaces d'appui 30a, 30b et des surfaces de fond 22, 24, l'effort exercé sur le pied d'aube 11 par les cales 26a, 26b dans la direction radiale est diminué.

En définitive, l'effort cumulé exercé par les deux cales 26a, 26b sur le pied d'aube 11 est fonction des paramètres suivants :
- les profils des deuxièmes surfaces d'appui 30a, 30b et des surfaces de fond 22, 24,
- le pas de la vis de serrage 32,
- la valeur de coefficients de friction entre la vis de serrage 32 et les douilles 38a, 38b, et entre les cales 26a, 26b et l'attache 9.

Dans les modes de réalisation décrits ci-dessus, le dispositif de verrouillage n'est pas obligatoire bien qu'avantageux pour éviter que les cales 26a, 26b ne sortent de l'alvéole 10 au cours du serrage. En effet, une fois que les cales 26a, 26 sont positionnées dans l'alvéole, elles se rapprochent encore au cours du serrage si bien qu'on peut éviter une telle sortie (pourvu qu'aucun desserrage excessif ne soit effectué).

Dans des exemples qui sortent du cadre de la présente invention, la présence de deux cales n'est en outre pas obligatoire, bien qu'avantageux car permet de répartir de manière plus homogène l'effort de serrage global exercé sur le pied d'aube 11.

Les douilles 38a, 38b sont facultatives, car les filetages coopérant avec la vis de serrage 32 peuvent être formés directement dans les cales 26a, 26b. Il peut être prévu une seule cale plutôt que deux.

Dans des exemples qui sortent du cadre de la présente invention, seule une des cales 26a, 26b peut coopérer avec la vis de serrage 32 via un filetage, tandis que l'autre cale peut être axialement bloquée par rapport à la vis de serrage. Ainsi, la présence de deux filetages qui coopèrent avec la vis de serrage 32 n'est pas davantage obligatoire. Un unique filetage peut suffire.

Dans les modes de réalisations illustrés, le fond de l'alvéole 10 est globalement convexe, si bien que les cales (lorsqu'il y en a deux) se rapprochent l'une de l'autre au cours du serrage. En variante, il peut être envisagé que les surfaces de fond 22, 24 forment ensemble une concavité au fond de l'alvéole 10, de sorte qu'une augmentation de l'effort de serrage exercé par les cales sur le pied d'aube 11 survient lorsque les deux cales sont éloignées l'une de l'autre.

## Revendications

1. Ensemble pour une aube de turbomachine, l'ensemble comprenant :
• une attache (9) définissant une alvéole (10) pour recevoir un pied (11) d'aube, l'attache (9) comprenant deux flancs définissant entre eux un passage donnant dans l'alvéole (10) et formant des butées empêchant le pied (11) de sortir de l'alvéole (10) par le passage,
• deux cales (26a, 26b), chaque cale (26a, 26b) comprenant :
o une première surface d'appui (28a, 28b) pour venir en appui sur le pied (11)
o une deuxième surface d'appui (30a, 30b) opposée à la première surface d'appui (28a, 28b) pour venir en appui contre l'attache (9) lorsque la cale (26a, 26b) est reçue dans l'alvéole,
o un filetage,
dans lequel les première et deuxième surfaces d'appui (28a, 28b, 30a, 30b) respectives des deux cales (26a, 26b) sont :
∘ fixes l'une par rapport à l'autre,
∘ orientées pour qu'un déplacement d'une des deux cales (26a, 26b) dans l'alvéole (10) par rapport à l'autre cale (26a, 26b) fasse varier la somme des efforts exercé par les deux cales (26a, 26b) sur le pied (11),
• une vis de serrage (32) coopérant avec les filetages respectifs des deux cales (26a, 26b) de sorte qu'une rotation de la vis de serrage (32) entraîne un déplacement d'une des deux cales (26a) par rapport à l'autre cale (26b).

2. Ensemble selon la revendication précédente, dans lequel l'attache (9) présente une surface de fond (22, 24) contre laquelle la deuxième surface d'appui (30a, 30b) d'une des deux cales vient en appui lorsque la cale (26a, 26b) est reçue dans l'alvéole (10), et dans lequel une surface parmi la deuxième surface d'appui (30a, 30b) et la surface de fond a un profil rectiligne parmi la deuxième surface d'appui (30a, 30b) et la surface de fond dans un plan parallèle à une direction d'insertion du pied d'aube dans l'alvéole (10), et l'autre surface a un profil courbe convexe dans ledit plan.

3. Ensemble selon la revendication précédente, dans lequel la surface ayant un profil courbe convexe est la deuxième surface d'appui (30a, 30b).

4. Ensemble selon l'une des revendications précédentes, comprenant en outre un dispositif de verrouillage configuré pour verrouiller au moins une des deux cales (26a, 26b) dans différentes positions relatives à l'attache (9), la somme des efforts exercé par les deux cales (26a, 26b) sur le pied (11) ayant des valeurs différentes dans les différentes positions.

5. Ensemble selon la revendication précédente, dans lequel le dispositif de verrouillage comprend la vis de serrage (32) et les filetages.

6. Ensemble selon la revendication précédente, dans lequel le dispositif de verrouillage comprend une douille (38a, 38b) dans laquelle est formé un des filetages, dans lequel au moins une des deux cales (26a, 26b) définit une cavité contenant une douille (38a, 38b) dans laquelle est formé un des filetages, la cavité étant adaptée pour bloquer la douille (38a, 38b) par rapport à la cale (26a, 26b) dans une direction parallèle à un axe de rotation de la vis de serrage (32) et pour autoriser un jeu de la douille par rapport à la cale (26a, 26b) dans une direction radiale par rapport à l'axe de rotation de la vis de serrage (32).

7. Ensemble selon l'une des revendications 5 et 6, dans lequel le dispositif de verrouillage comprend un système d'anti-rotation empêchant la vis de serrage (32) d'être mise en rotation dans un sens provoquant une diminution de la somme des efforts exercés par les deux cales (26a, 26b) sur le pied (11).

8. Ensemble selon l'une des revendications 5 à 7, dans lequel la vis de serrage (32) comprend une tête (34) agencée pour déboucher à l'extérieur de l'alvéole (10) et du dispositif de verrouillage de manière à pouvoir être mise en prise et entraînée en rotation par un outil, lorsque les deux cales (26a, 26b) sont reçues dans l'alvéole (11).

9. Ensemble selon l'une des revendications 5 à 8, dans lequel l'attache (9) définit deux accès opposés (16, 18) permettant une introduction du pied (11) et des deux cales (26a, 26b) dans l'alvéole (10), et dans lequel le dispositif de verrouillage comprend deux verrous (40a, 40b) traversés par la vis de serrage (32), les verrous (40a, 40b) étant agencés pour empêcher les deux cales (26a, 26b) de quitter l'alvéole (10) par les accès opposés (16, 18) lorsque la vis de serrage (32) est mise en rotation.

10. Ensemble selon l'une des revendications précédentes, dans lequel l'attache (9) présente deux surfaces de fond (22, 24) contre lesquelles les deuxièmes surfaces d'appui des deux cales (26a, 26b) viennent respectivement en appui lorsque les deux cales (26a, 26b) sont reçues dans l'alvéole, dans lequel les deuxièmes surfaces d'appui ont des pentes différentes, et dans lequel les surfaces de fond (22, 24) ont des pentes différentes.

11. Ensemble selon l'une des revendications précédentes, dans lequel au moins une des deux cales (26a, 26b) est métallique, par exemple en titane.

12. Soufflante non-carénée (3), par exemple à calage variable, comprenant un ensemble selon l'une des revendications précédentes.

## Patentansprüche

1. Anordnung für eine Turbomaschinenschaufel, wobei die Anordnung umfasst:
• ein Befestigungselement (9), das eine Vertiefung (10) zur Aufnahme eines Schaufelfußes (11) definiert, wobei das Befestigungselement (9) zwei Flanken aufweist, die zwischen sich einen Durchgang definieren, der in die Vertiefung (10) führt, und Anschläge bildet, die den Fuß (11) daran hindern, durch den Durchgang aus der Vertiefung (10) zu treten,
• zwei Keile (26a, 26b), wobei jeder Keil (26a, 26b) Folgendes umfasst:
o eine erste Stützfläche (28a, 28b), um am Fuß (11) zur Anlage zu kommen,
o eine zweite Stützfläche (30a, 30b), die der ersten Stützfläche (28a, 28b) gegenüberliegt, um an dem Befestigungselement (9) zur Anlage zu kommen, wenn der Keil (26a, 26b) in der Vertiefung aufgenommen ist,
o ein Gewinde,
wobei die jeweiligen ersten und zweiten Stützflächen (28a, 28b, 30a, 30b) der beiden Keile (26a, 26b) Folgendes sind:
o miteinander fixiert,
o so ausgerichtet, dass eine Verschiebung eines der beiden Keile (26a, 26b) in der Vertiefung (10) in Bezug auf den anderen Keil (26a, 26b) die Höhe der Belastung, die auf den Fuß (11) durch die beiden Keile (26a, 26b) ausgeübt wird, variiert,
• eine Klemmschraube (32), die mit den jeweiligen Gewinden der beiden Keile (26a, 26b) derart zusammenwirkt, dass eine Drehung der Klemmschraube (32) eine Verschiebung eines der beiden Keile (26a) in Bezug auf den anderen Keil (26b) bewirkt.

2. Anordnung nach dem vorhergehenden Anspruch, wobei das Befestigungselement (9) eine Bodenfläche (22, 24) aufweist, an der die zweite Stützfläche (30a, 30b) eines der beiden Keile zur Anlage kommt, wenn der Keil (26a, 26b) in der Vertiefung (10) aufgenommen ist, und wobei eine Fläche aus der zweiten Stützfläche (30a, 30b) und die Bodenfläche ein geradliniges Profil zwischen der zweiten Stützfläche (30a, 30b) und der Bodenfläche in einer Ebene parallel zu einer Einführrichtung des Schaufelfußes in die Vertiefung (10) aufweist und die andere Fläche in dieser Ebene ein konvexes Kurvenprofil aufweist.

3. Anordnung nach dem vorhergehenden Anspruch, wobei die Fläche mit dem konvexen Kurvenprofil die zweite Stützfläche (30a, 30b) ist.

4. Anordnung nach einem der vorhergehenden Ansprüche, ferner umfassend eine Verriegelungsvorrichtung, die dazu konfiguriert ist, mindestens einen der beiden Keile (26a, 26b) in verschiedenen Positionen relativ zum Befestigungselement (9) zu verriegeln, wobei die Höhe der Belastung, die auf den Fuß (11) durch die beiden Keile (26a, 26b) ausgeübt wird, unterschiedliche Werte in den verschiedenen Positionen aufweist.

5. Anordnung nach dem vorhergehenden Anspruch, wobei die Verriegelungsvorrichtung die Klemmschraube (32) und das Gewinde umfasst.

6. Anordnung nach dem vorhergehenden Anspruch, wobei die Verriegelungsvorrichtung eine Hülse (38a, 38b) umfasst, in der eines der Gewinde ausgebildet ist, wobei mindestens einer der beiden Keile (26a, 26b) einen Hohlraum definiert, der eine Hülse (38a, 38b) enthält, in der eines der Gewinde ausgebildet ist, wobei der Hohlraum so ausgelegt ist, dass er die Hülse (38a, 38b) in Bezug auf den Keil (26a, 26b) in einer Richtung parallel zu einer Drehachse der Klemmschraube (32) blockiert und ein Spiel der Hülse in Bezug auf den Keil (26a, 26b) in einer radialen Richtung in Bezug zur Drehachse der Klemmschraube (32) ermöglicht.

7. Anordnung nach einem der Ansprüche 5 und 6, wobei die Verriegelungsvorrichtung ein Drehblockiersystem umfasst, das verhindert, dass die Klemmschraube (32) in eine Richtung gedreht wird, die zu einer Verringerung der Höhe der Belastung, die auf den Fuß (11) durch die beiden Keile (26a, 26b) ausgeübt wird, führt.

8. Anordnung nach einem der Ansprüche 5 bis 7, wobei die Klemmschraube (32) einen Kopf (34) umfasst, der angeordnet ist, um aus der Vertiefung (10) und der Verriegelungsvorrichtung heraus zu münden, um durch ein Werkzeug in Eingriff genommen und in Drehung versetzt werden zu können, wenn die beiden Keile (26a, 26b) in der Vertiefung (11) aufgenommen sind.

9. Anordnung nach einem der Ansprüche 5 bis 8, wobei das Befestigungselement (9) zwei gegenüberliegende Zugänge (16, 18) definiert, die das Einführen des Fußes (11) und der beiden Keile (26a, 26b) in die Vertiefung (10) ermöglichen, und wobei die Verriegelungsvorrichtung zwei Riegel (40a, 40b) umfasst, die durch die Klemmschraube (32) hindurchgehen, wobei die Riegel (40a, 40b) so angeordnet sind, dass sie die beiden Keile (26a, 26b) daran hindern, durch die gegenüberliegenden Zugänge (16, 18) aus der Vertiefung (10) zu treten, wenn die Klemmschraube (32) gedreht wird.

10. Anordnung nach einem der vorhergehenden Ansprüche, wobei das Befestigungselement (9) zwei Bodenflächen (22, 24) aufweist, an denen die zweiten Stützflächen der beiden Keile (26a, 26b) jeweils zur Anlage kommen, wenn die beiden Keile (26a, 26b) in der Vertiefung aufgenommen sind, wobei die zweiten Stützflächen unterschiedliche Neigungen aufweisen und wobei die Bodenflächen (22, 24) unterschiedliche Neigungen aufweisen.

11. Anordnung nach einem der vorhergehenden Ansprüche, wobei mindestens einer der beiden Keile (26a, 26b) metallisch ist, beispielsweise aus Titan.

12. Nicht verkleidetes Gebläse (3), beispielsweise mit variabler Keilform, umfassend eine Anordnung nach einem der vorhergehenden Ansprüche.

## Claims

1. A assembly for a blade of a gas turbine engine, the assembly comprising:
• a fastener (9) defining a recess (10) for receiving a blade root (11), the fastener (9) having two flanks defining between them a passage leading into the recess (10) and forming stops preventing the root (11) from emerging from the recess (10) through the passage,
• two wedges (26a, 26b), each wedge (26a, 26b) comprising:
o a first support surface (28a, 28b) to come into contact with the foot (11),
o a second support surface (30a, 30b) opposite the first support surface (28a, 28b) for abutting the fastener (9) when the wedge (26a, 26b) is received in the recess,
o a thread,
wherein the respective first and second support surfaces (28a, 28b, 30a, 30b) of the two wedges (26a, 26b) are as follows:
o fixed together,
∘ oriented so that a displacement of one of the two wedges (26a, 26b) in the recess (10) with respect to the other wedge (26a, 26b) varies the amount of load exerted on the foot (11) by the two wedges (26a, 26b),
• a clamping screw (32) cooperating with the respective threads of the two wedges (26a, 26b) in such a way that a rotation of the clamping screw (32) causes a displacement of one of the two wedges (26a) with respect to the other wedge (26b).

2. An assembly according to the preceding claim, wherein the fastener (9) has a bottom surface (22, 24) against which the second support surface (30a, 30b) of one of the wedges comes into abutment when the wedge (26a, 26b) is received in the recess (10), and wherein a surface of the second support surface (30a, 30b) and the bottom surface has a rectilinear profile between the second support surface (30a, 30b) and the bottom surface in a plane parallel to a direction of insertion of the blade root into the recess (10) and the other surface has a convex curved profile in this plane.

3. An assembly according to the preceding claim, wherein the surface with the convex curve profile is the second supporting surface (30a, 30b).

4. An assembly according to any one of the preceding claims, further comprising a locking device configured to lock at least one of the two wedges (26a, 26b) in different positions relative to the fastening element (9), wherein the amount of load exerted on the foot (11) by the two wedges (26a, 26b) has different values in the different positions.

5. An assembly according to the preceding claim, wherein the locking device comprises the clamping screw (32) and the thread.

6. An assembly according to the preceding claim, wherein said locking device comprises a sleeve (38a, 38b) in which one of said threads is formed, at least one of said wedges (26a, 26b) defining a cavity containing a sleeve (38a, 38b) in which one of said threads is formed, the cavity being configured to block the sleeve (38a, 38b) with respect to the wedge (26a, 26b) in a direction parallel to an axis of rotation of the clamping screw (32) and to allow play of the sleeve with respect to the wedge (26a, 26b) in a radial direction with respect to the axis of rotation of the clamping screw (32).

7. An assembly according to any one of claims 5 and 6, wherein the locking device comprises a rotation blocking system that prevents the clamping screw (32) from being rotated in a direction that results in a reduction of the amount of load applied to the foot (11) by the two wedges (26a, 26b).

8. An assembly according to any one of claims 5 to 7, wherein the clamping screw (32) comprises a head (34) arranged to emerge from the recess (10) and the locking device so as to be engageable and rotatable by a tool when the two wedges (26a, 26b) are received in the recess (11) .

9. An assembly according to any one of claims 5 to 8, wherein the fastening element (9) defines two opposite accesses (16, 18) allowing the insertion of the foot (11) and the two wedges (26a, 26b) into the recess (10), and wherein the locking device comprises two latches (40a, 40b) passing through the clamping screw (32), the latches (40a, 40b) being arranged to prevent the two wedges (26a, 26b) from passing out of the recess (10) through the opposed accesses (16, 18) when the clamping screw (32) is rotated.

10. An assembly according to any one of the preceding claims, wherein the fastening element (9) comprises two bottom surfaces (22, 24) against which the second support surfaces of the two wedges (26a, 26b) respectively come into abutment when the two wedges (26a, 26b) are received in the recess, wherein the second support surfaces have different inclinations and wherein the bottom surfaces (22, 24) have different inclinations.

11. An assembly according to any one of the preceding claims, wherein at least one of the two wedges (26a, 26b) is metallic, for example made of titanium.

12. An unducted fan (3), for an variable pitch fan, comprising an assembly according to any of the preceding claims.
